# EUROPÄISCHE PATENTANMELDUNG

(11) **EP 1 575 113 A2**
(43) Veröffentlichungstag der Anmeldung: **14.09.2005**
(21) Anmeldenummer: 05005340.4
(22) Anmeldetag: 11.03.2005
(51) Int. Cl.: H01M 8/04, H01M 8/24

(54) **Brennstoffzellenanordnung**

(30) Priorität: 11.03.2004 DE 102004012332
(71) Anmelder: Masterflex AG, 45699 Herten (DE)
(72) Erfinder: Müller, Willfried, 46147 Oberhausen (DE)
(74) Vertreter: Gesthuysen, von Rohr & Eggert

(57) **Zusammenfassung**

Brennstoffzellenanordnung mit mehreren geschichteten Brennstoffzellen und ein Verfahren zum Betreiben einer derartigen Brennstoffzellenanordnung. Um eine übermäßige Befeuchtung einzelner Brennstoffzellen zu vermeiden, wird der Druckabfall, Strömungswiderstand oder ein dazu korrespondierender Wert für jede Brennstoffzelle einzeln bestimmt.

## Beschreibung

Die vorliegende Erfindung betrifft eine Brennstoffzellenanordnung gemäß dem Oberbegriff des Anspruchs 1 sowie ein Verfahren gemäß dem Oberbegriff des Anspruchs 8.

Brennstoffzellen zeichnen sich durch einen hohen elektrischen Wirkungsgrad, niedrige Schadstoffemissionen sowie geringe Geräuschentwicklung aus und sind insbesondere zum Antrieb von Fahrzeugen bzw. zur mobilen Erzeugung elektrischer Energie sehr gut geeignet. Insbesondere wird eine Brennstoffzelle mit einer Polymer-Elektrolyt-Membran (PEM) aufgrund ihres verhältnismäßig niedrigen Betriebstemperaturbereichs, ihrer Robustheit und ihrer Toleranz gegenüber Druckschwankungen favorisiert.

Bei einer PEM-Brennstoffzelle wird vorzugsweise Wasserstoff als Brenngas oder sonstiger Brennstoff, wie Methanol, eingesetzt. Der Wasserstoff wird an einer insbesondere Platin als Katalysator aufweisenden Anode zerlegt und zu Protonen oxidiert, die durch die PEM zu einer Kathode gelangen und dort mit zugeführtem Sauerstoff reagieren und Wasser bilden. Bei einer PEM ist ein gewisser Anteil an Wasser bzw. eine gewisse Befeuchtung für die gewünschte Ionen- bzw. Protonenleitung erforderlich. Eine ausreichende Befeuchtung der PEM und eine Abführung des entstehenden Wassers sind für die Funktion der Brennstoffzelle und einen hohen Wirkungsgrad wesentlich.

Die DE 100 48 331 A1 und die US 6,103,409 A offenbaren eine Anordnung aus geschichteten Brennstoffzellen - einen sogenannten Brennstoffzellenstack. Die Brennstoffzellen sind parallel an eine Luftzuführung und Luftableitung zur kathodenseitigen Versorgung mit Sauerstoff und parallel an eine Brenngaszuleitung und Brenngasableitung zur anodenseitigen Versorgung mit Brenngas angeschlossen.

Beim Betrieb einer PEM-Brennstoffzelle führt das entstehende Wasser zu Problemen. Insbesondere übermäßige Feuchtigkeit bzw. Befeuchtung der PEM erhöht den kathodenseitigen Strömungswiderstand für zugeführtes Gas, wie Luft oder ein sonstiges Oxidationsgas, und senkt die elektrische Leistung der jeweiligen Brennstoffzelle. Der sich erhöhende Strömungswiderstand hat zur Folge, daß sich in der jeweiligen Brennstoffzelle aufgrund der ParallelSchaltung aller Brennstoffzellen der Gasstrom und damit der Abtransport von Feuchtigkeit bzw. Wasser durch den Gasstrom reduzieren, so daß der Befeuchtungsgrad der PEM in unerwünschter Weise weiter ansteigt.

Die US 6,103,409 A sieht jeweils einen Drucksensor in der Brenngaszuleitung, Brenngasableitung, der Luftzuführung und der Luftableitung vor. Mittels dieser Sensoren wird der über den Brennstoffzellenstack auftretende Druckabfall brenngasseitig und luftgasseitig ermittelt und zur Steuerung der Gasbefeuchtung herangezogen. Eine optimale Steuerung oder Regelung der Brennstoffzellen wird dadurch jedoch nicht ermöglicht.

Der vorliegenden Erfindung liegt die Aufgabe zugrunde, eine Brennstoffzellenanordnung und ein Verfahren zum Betreiben einer Brennstoffzellenanordnung mit mehreren Brennstoffzellen anzugeben, so daß eine optimale Gasversorgung und damit eine optimale Leistung der einzelnen Brennstoffzellen ermöglicht werden.

Die obige Aufgabe wird durch eine Brennstoffzellenanordnung gemäß Anspruch 1 oder ein Verfahren gemäß Anspruch 8 gelöst. Vorteilhafte Weiterbildungen sind Gegenstand der Unteransprüche.

Gemäß einer wesentlichen Idee der vorliegenden Erfindung wird der Druckabfall, der Strömungswiderstand oder ein dazu korrespondierender Wert der Strömungsfelder für jede Brennstoffzelle einzeln bestimmt. Dies erfolgt vorzugsweise mittels eines gemeinsamen Drucksensors in der Gasableitung durch einzelweises, vorzugsweise pulsartiges Beaufschlagen der Strömungsfelder mit Gas. In Abhängigkeit von einer Erhöhung des Druckabfalls, des Strömungswiderstands oder des korrespondierenden Werts beim jeweiligen Strömungsfeld kann der Gasstrom oder Versorgungsdruck der jeweiligen Brennstoffzelle in geeigneter Weise geändert, insbesondere ggf. erhöht werden. Dies kann auch dazu benutzt werden, um baulich bedingte Unterschiede auszugleichen und einen für einen optimalen Betrieb aller Brennstoffzellen günstigen Strömungszustand durch die Brennstoffzellen herzustellen.

Vorzugsweise ist eine gemeinsame Gassteuereinrichtung zur einzelweisen oder gruppenweisen Steuerung der Gasströme durch die sogenannten Strömungsfelder der Brennstoffzellen vorgesehen. Die Gasströme, insbesondere die kathodenseitigen Gasströme für Luft oder ein sonstiges Oxidationsgas, durch die Strömungsfelder können also für die Brennstoffzellen einzeln oder gruppenweise, also unabhängig von den Gasströmen durch andere Brennstoffzellen gesteuert und gegebenenfalls geregelt werden. So sind die Gasströme in einzelnen Brennstoffzellen unabhängig von anderen Brennstoffzellen derart variierbar, daß insbesondere eine übermäßige kathodenseitige Befeuchtung der jeweiligen Brennstoffzelle, insbesondere deren PEM, durch Steuerung bzw. Regelung des jeweiligen Gasstroms verhinderbar ist.

Gemäß einer Ausführungsvariante wird die elektrische Leistung oder Spannung der einzelnen Brennstoffzellen überwacht, wobei ein Abfall der Leistung bzw. Spannung ein Ansteigen des Befeuchtungsgrads der jeweiligen Brennstoffzelle anzeigt. Insbesondere bei Unter- bzw. Überschreiten eines gewissen Grenzwerts wird dann der Druckabfall, der Strömungswiderstand oder der dazu korrespondierende Wert zur tatsächlichen bzw. besseren Bestimmung des Befeuchtungszustandes für die einzelne(n) Brennstoffzelle(n) ermittelt und/oder ggf. direkt der Gasstrom für diese Brennstoffzelle erhöht, um den Befeuchtungsgrad wieder zu verringern.

Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigt:
- Fig. 1: eine schematische Seitenansicht einer vorschlagsgemäßen Brennstoffzellenanordnung;
- Fig. 2: einen schematischen Schnitt durch eine Brennstoffzelle der Brennstoffzellenanordnung;
- Fig. 3: eine ausschnittsweise Vergrößerung von Fig. 2; und
- Fig. 4: eine schematische Draufsicht der Brennstoffzellenanordnung im angeschlossenen Zustand.

In den Figuren werden für gleiche oder ähnliche Teile die selben Bezugszeichen verwendet, wobei entsprechende oder vergleichbare Eigenschaften und Vorteile erreicht werden, auch wenn eine wiederholte Beschreibung weggelassen ist.

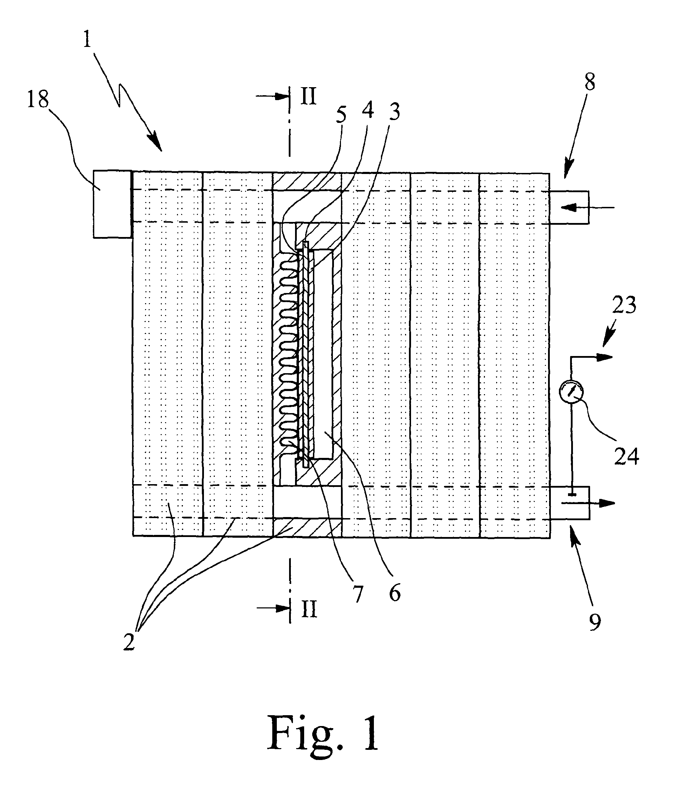

Fig. 1 zeigt in schematischer Darstellung eine vorschlagsgemäße Brennstoffzellenanordnung 1 mit mehreren, aufeinander geschichteten Brennstoffzellen 2. Eine der Brennstoffzellen 2 ist zur Veranschaulichung geschnitten dargestellt. Anhand dieser Brennstoffzelle 2 wird nachfolgend der Aufbau der Brennstoffzellen 2, die vorzugsweise baugleich ausgebildet sind, erläutert.

Die Brennstoffzelle 2 weist eine Anode 3, eine Membran 4 und eine Kathode 5 auf. Die Anode 3 und die Kathode 5 sind vorzugsweise auf gegenüberliegenden Seiten der vorzugsweise ausschließlich Protonen leitenden Membran 4 angeordnet.

Bei der Anode 3 handelt es sich insbesondere um eine Drei-Phasen-Schicht, wie bei Brennstoffzellen bekannt, beispielsweise aus Graphit, einem Katalysator-Material, wie ein Metall oder eine Legierung der Platin-Gruppe, und einem geeigneten Protonen leitenden Material. Die Kathode 5 kann entsprechend aufgebaut sein.

Brenngas, insbesondere Wasserstoff, ist der Anode 3 über ein anodenseitiges Strömungsfeld 6 zuführbar. Im Falle von Wasserstoff erfolgt an der Anode 3 eine Zerlegung und eine Oxidation zu Protonen, die durch die Membran 4 zu der Kathode 5 geleitet werden, an der sie mit Sauerstoff zu Wasser reagieren.

Durch ein kathodenseitiges Strömungsfeld 7 wird zur Bereitstellung des Sauerstoffs oder eines sonstigen Oxidationsgases vorzugsweise Luft der Kathode 5 zugeführt.

Die Membran 4 trennt also die beiden Strömungsfelder 6 und 7 bzw. das Brenngas und das Oxidationsgas voneinander. Insbesondere handelt es sich bei der Membran 4 um eine Polymer-Elektrolyt-Membran (PEM) oder eine Membran aus einem sonstigen geeigneten Material.

In der schematischen Darstellung sind die der Membran 4 zugeordnete Anode 3 und Kathode 5 nur schematisch gezeigt. Beispielsweise Bipolarplatten oder sonstige elektrische Anschlußeinrichtungen für die Anode 3 und die Kathode 5 sind aus Vereinfachungsgründen nicht dargestellt und dienen einer Abführung der von der Brennstoffzelle 2 erzeugten elektrischen Energie, wenn beispielsweise Wasserstoff zu Wasser in der Brennstoffzelle 2 oxidiert wird.

Je nach Temperatur liegt das kathodenseitig entstehende Wasser in flüssiger und/oder gasförmiger Form vor. Der Gasstrom durch das kathodenseitige Strömungsfeld 7 führt je nach eingangsseitiger Feuchte zu einer kathodenseitigen Trocknung, das heißt einem Abtransport von entstehendem Wasser. Zusätzlich kann entstehendes, insbesondere in flüssiger Form vorliegendes Wasser auch durch eine nicht gezeigte Ableitung oder dergleichen abgeleitet werden.

Der Befeuchtungsgrad der Membran 4 ist für deren Protonen- bzw. Ionenleitfähigkeit wichtig und/oder für den Strömungswiderstand im Strömungsfeld 7 mit maßgebend. Dementsprechend ist die Leistung der Brennstoffzelle 2 vom Befeuchtungsgrad abhängig.

Die Brennstoffzellen 2 sind einerseits mit ihren anodenseitigen Strömungsfelder 6 parallel an eine in Fig. 1 nicht dargestellte Brenngaszuführung und -ableitung und andererseits mit ihren kathodenseitigen Strömungsfeldern 7 parallel an eine Gaszuführung 8 und eine Gasableitung 9 zur Versorgung mit Luft oder sonstigem Oxidationsgas angeschlossen.

In Fig. 1 ist angedeutet, daß die Gaszuführung 8 einen Zuführkanal 10 und die Gasableitung 9 einen Ableitungskanal 11 aufweist, wobei die Kanäle 10, 11 jeweils die Brennstoffzellen 2 durchgreifen und die Strömungsfelder 7 an diese Kanäle 10, 11 angeschlossen sind.

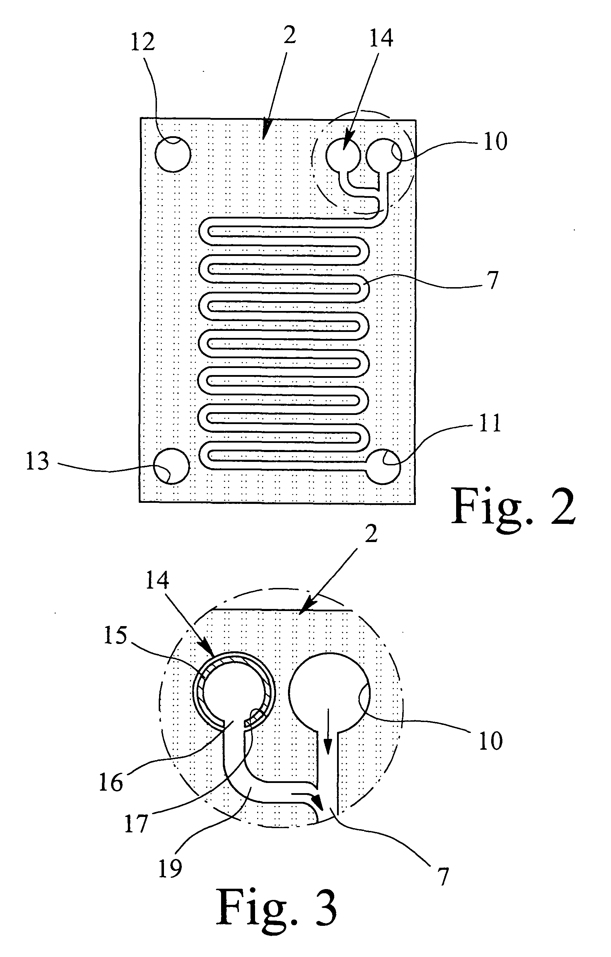

Fig. 2 zeigt in einem schematischen Schnitt gemäß Linie II-II von Fig. 1 die Brennstoffzelle 2 kathodenseitig. Die Kanäle 10 und 11 zur Zuführung und Ableitung von Gas und das daran angeschlossene Strömungsfeld 7 sind schematisch angedeutet.

Bei dem Strömungsfeld 7 kann es sich - wie beim Darstellungsbeispiel - um einen einzelnen, beispielsweise mäanderartig verlaufenden Kanal, aber auch um eine Vielzahl von parallelen Kanälen oder eine sonstige Strömungsfläche bzw. einen Strömungsbereich handeln. Der Begriff "Strömungsfeld" ist dementsprechend vorzugsweise in einem sehr weiten bzw. allgemeinen Sinn zu verstehen. Verschiedene konstruktive Lösungen sind dem Fachmann aus dem Stand der Technik bekannt.

In Fig. 2 sind des weiteren eine Brenngaszuleitung 12 und eine Brenngasableitung 13 angedeutet, an die die in Fig. 2 nicht dargestellten anodenseitigen Strömungsfelder 6 der Brennstoffzellen 2 parallel angeschlossen sind.

Beim Darstellungsbeispiel sind also vorzugsweise alle Brennstoffzellen 2 strömungsmäßig jeweils anodenseitig und kathodenseitig parallel geschaltet.

Zur Modifizierung der kathodenseitigen Gasströme durch die Strömungsfelder 7 weist die Brennstoffzellenanordnung 1 zusätzlich eine Gassteuereinrichtung 14 auf, wie in Fig. 2 nur schematisch angedeutet. Mittels der Gassteuereinrichtung 14 sind die Gasströme durch die Strömungsfelder 7 der Brennstoffzellen 2 einzelweise oder gruppenweise steuerbar bzw. regelbar.

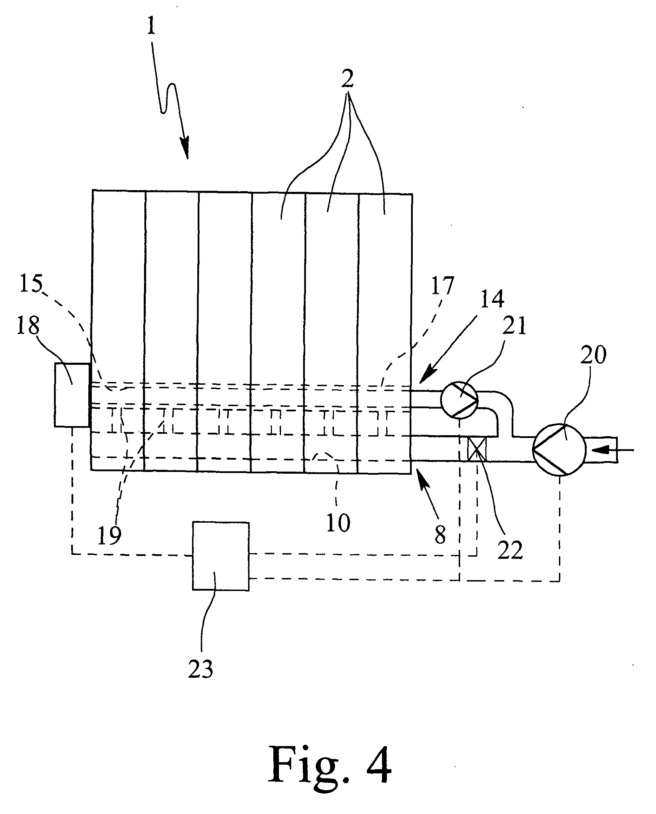

Fig. 3 zeigt in einer ausschnittsweisen Vergrößerung von Fig. 2 die Gassteuereinrichtung 14, die beim Darstellungsbeispiel ein Steuerrohr 15 mit Durchbrechungen 16 in einem Steuerkanal 17 aufweist. Das Steuerrohr 15 ist mittels eines in Fig. 1 und 4 angedeuteten Antriebs 18, vorzugsweise einem Schrittmotor oder dergleichen, im Zuführkanal 17 drehbar. Die Durchbrechungen 16 sind derart ausgebildet und angeordnet, daß je nach Drehlage des Steuerrohrs 15 Verbindungskanäle 19 zwischen dem Steuerkanal 17 und den Strömungsfeldem 7 einzelweise oder gruppenweise - also für die Brennstoffzellen 2 nur einzeln oder für eine Gruppe von Brennstoffzellen 2 - freigebbar sind. Im freigegebenen Zustand, wie in Fig. 3 dargestellt, kann dann zusätzlich Gas aus dem Inneren des Steuerrohrs 15 über den Verbindungskanal 19 zusätzlich in das Strömungsfeld 7 strömen, wie durch die Pfeile angedeutet.

Beim Darstellungsbeispiel wird die Gassteuereinrichtung 14 mit Gas, insbesondere Luft oder einem sonstigen Oxidationsgas, versorgt, wobei der Gasdruck vorzugsweise etwas höher als der Gasdruck der Gaszuführung 8 bzw. der in dem Zuführkanal 10 herrschende Gasdruck ist. So kann je nach Drehlage des Steuerrohrs 15 Gas aus dem Inneren des Steuerrohrs 15 über den von der Durchgangsöffnung 16 freigegebenen Verbindungskanal 19 in das zugeordnete Strömungsfeld 7 strömen und dementsprechend dessen Gasstrom - also den Gasstrom durch das Strömungsfeld 7 - erhöhen. Entsprechendes gilt, wenn die Gassteuereinrichtung 14 bzw. das Steuerrohr 15 gleichzeitig mehrere Verbindungskanäle 19 zu einer Gruppe von Brennstoffzellen 2 öffnet.

Folglich ist mittels der Gassteuereinrichtung 14 bzw. des Steuerrohrs 15 eine einzelweise oder gruppenweise Steuerung oder gegebenenfalls sogar Regelung der Gasströme durch die Strömungsfelder 7 möglich.

Beim Darstellungsbeispiel verläuft der Steuerkanal 17 vorzugsweise parallel zum Zuführkanal 10 und durchgreift die hintereinander bzw. geschichtet angeordneten Brennstoffzellen 2.

Das Steuerrohr 15 ist beim Darstellungsbeispiel drehbar. Alternativ oder zusätzlich kann es auch axial bewegbar sein, um die gewünschte wahlweise Freigabe oder Sperrung der Verbindungskanäle 19 zu den einzelnen Strömungsfeldern 7 zu bewirken.

Zusätzlich oder alternativ kann im Steuerrohr 15 auch eine weiteres, nicht dargestelltes Steuerrohr oder sonstiges Stellglied vorgesehen sein, insbesondere wobei die beiden relativ zueinander bewegbar bzw. verstellbar sind, um die gewünschten Steuerfunktionen zu erreichen.

Alternativ oder zusätzlich kann das Steuerrohr 15 auch als eine Walze oder als ein sonstiges geeignetes Stellelement ausgebildet sein. Dementsprechend ist der Begriff "Steuerrohr" bei der vorliegenden Erfindung vorzugsweise in einem weiten Sinn, sehr allgemein also als Stellelement zu verstehen.

Bemerkenswert ist, daß vorzugsweise nur eine einzige, also gemeinsame Gassteuereinrichtung 14 für alle Brennstoffzellen 2 oder zumindest für eine Gruppe von Brennstoffzellen 2 vorgesehen ist.

Beim Darstellungsbeispiel ist die Gassteuereinrichtung 14 oder zumindest deren Steuerrohr 15 in die Brennstoffzellen 2 integriert bzw. durchgreift diese. Alternativ kann das Steuerrohr 15 auch außerhalb davon angeordnet und über entsprechende Verbindungen an die Brennstoffzellen 2 angeschlossen sein.

Anstelle einer Zuführung von zusätzlichem Gas mit insbesondere gegenüber der Gaszuführung 8 bzw. dem Zuführkanal 10 erhöhtem Gasdruck kann die Gassteuereinrichtung 14 auch einer nicht dargestellten Bereitstellung von Steuergas zur Betätigung von nicht dargestellten Ventilen, Druckreglern, Drosseln oder dergleichen dienen, um die Gasströme durch die Strömungsfelder 7 entsprechend - also einzelweise oder gruppenweise für die Brennstoffzellen 2 - zu steuern oder gegebenenfalls zu regeln. Vorzugsweise wird hierzu dann wiederum Luft bzw. das gleiche Gas wie für die Gaszuführung 8 als Steuergas verwendet.

Fig. 4 zeigt in schematischer Darstellung eine Draufsicht der Brennstoffzellenanordnung 1. Der Zuführkanal 10 ist an eine Hauptpumpe 20 der Gaszuführung 8 angeschlossen. Bedarfsweise kann ein nicht dargestellter Druckspeicher oder dergleichen zwischengeschaltet sein.

Die Gassteuereinrichtung 14, insbesondere deren Steuerkanal 17 bzw. das Innere des Steuerrohrs 15, ist vorzugsweise über eine Zusatzpumpe 21 an die Gaszuführung 8, insbesondere an die Abströmseite der Hauptpumpe 20, angeschlossen. Die Zusatzpumpe 21 dient einer Erhöhung des Gasdrucks, wobei eine bereits geringe Erhöhung, beispielsweise um 50 bis 200 Pa je nach Strömungsverhältnissen, genügt.

Um den beim Darstellungsbeispiel gewünschten höheren Gasdruck der Gassteuereinrichtung 14 gegenüber dem Gasdruck im Zuführkanal 10 zu erreichen, kann alternativ oder zusätzlich zu der Zusatzpumpe 21 bzw. einer sonstigen Druckerhöhungseinrichtung auch eine Drossel, ein Ventil oder Druckregler 22 oder dergleichen dem Zuführkanal 10 zugeordnet sein, wie in Fig. 4 angedeutet.

Weiter kann die Gaszuführung 8 außerdem eine nicht dargestellte Einrichtung zur Beeinflussung und gegebenenfalls Festlegung oder Einstellung der Feuchte des zugeführten Gases, wie Luft, aufweisen.

Die Brennstoffzellenanordnung 1 weist ferner vorzugsweise eine Steuereinrichtung 23 auf, die insbesondere einer Steuerung des Antriebs 18, der Hauptpumpe 20, der Zusatzpumpe 21, des Druckreglers bzw. Ventils 22 und/oder sonstiger Einrichtungen dient.

Die Steuereinrichtung 23 dient ferner vorzugsweise einer Erfassung der von den einzelnen Brennstoffzellen 2 abgegebenen elektrischen Leistung bzw. Spannung.

Alternativ oder zusätzlich kann die Steuereinrichtung 23 auch den Gasdruck, insbesondere auf der Abströmseite der Strömungsfelder 7, erfassen. Insbesondere ist hierzu ein Drucksensor 24 der Gasabführung 9 bzw. dessen Ableitungskanal 11 zugeordnet, wie in Fig. 1 angedeutet.

Wenn die Leistung oder elektrische Spannung einer Brennstoffzelle 2 sinkt, deutet dies daraufhin, daß sich der Befeuchtungsgrad dieser Brennstoffzelle 2 (in unerwünschter Weise) erhöht hat, wodurch deren Leistungsfähigkeit beeinträchtigt wird.

Mittels der Gassteuereinrichtung 14 wird dann der Gasstrom durch die betreffende Brennstoffzelle 2 erhöht, um der mit dem erhöhten Befeuchtungsgrad einhergehenden Erhöhung des Strömungswiderstands zu begegnen und insbesondere dem Befeuchtungsgrad wieder zu reduzieren bzw. normalisieren. Durch den erhöhten Gasstrom erfolgt also eine kathodenseitige "Trocknung" bzw. Verringerung der Befeuchtung der Brennstoffzelle 2, insbesondere der Membran 4.

Je nach Ausgestaltung kann die Erhöhung des Gasstroms bedarfsweise auch gleichzeitig für mehrere Brennstoffzellen 2 - also gruppenweise - erfolgen.

Ergänzend wird auf die DE 197 47 596 C1 verwiesen, die alternative Konstruktionen und weitere Aspekte zur selektiven Gaszuführung offenbart und als ergänzende Offenbarung, insbesondere hinsichtlich der Anordnung und/oder Realisierung der Gassteuereinrichtung 14 genannt wird.

Alternativ oder zusätzlich zu der gemeinsamen Gassteuereinrichtung 14 können jedoch auch sonstige Ventile, Ventileinrichtungen oder dgl. vorgesehen sein, insbesondere um die gewünschte einzelweise, gruppenweise oder selektive Gaszuführung zu erreichen.

Die vorangegangenen Ausführungen hinsichtlich der einzelweisen oder gruppenweisen bzw. selektiven Gassteuerung können alternativ oder zusätzlich auch brenngasseitig, insbesondere also für die Brenngaszuführung 12 und Brenngasableitung 13 bzw. die anodenseitigen Strömungsfelder 6 eingesetzt werden. Dies ermöglicht ebenfalls auf einfache Weise eine optimierte, individuelle Steuerung oder Regelung der einzelnen Brennstoffzellen 2.

Vorschlagsgemäß erfolgt eine Bestimmung des Druckabfalls, des Strömungswiderstands oder eines dazu korrespondierenden, insbesondere ebenfalls vom Befeuchtungsgrad abhängigen Werts der Strömungsfelder 7 separat für jede einzelne Brennstoffzelle 2. Beim Darstellungsbeispiel wird zur einzelweisen Bestimmung der genannten Strömungsparameter die Zuführung von Gas zum Zuführkanal 10 - beispielsweise mittels des Druckreglers bzw. Ventils 22 - unterbrochen. Anschließend wird durch entsprechende Bewegung, insbesondere kontinuierliches Drehen, des Steuerrohrs 15 den einzelnen Brennstoffzellen 2 bzw. deren kathodenseitigen Strömungsfeldern 7 nacheinander kurzzeitig Gas zugeführt. Durch das zyklische Freigeben und Sperren der Verbindungskanäle 19 zu den Strömungsfeldern 7 erfolgt insbesondere eine pulsartige Gaszuführung.

Mittels des Drucksensors 24 werden die Druckpulse abströmseitig erfaßt, wobei die Höhe der erfaßten Druckpulse ein Maß für den Druckabfall bzw. Strömungswiderstand in der jeweiligen Brennstoffzelle 2 darstellt. So wird auf einfache Weise der Druckabfall, Strömungswiderstand oder ein sonstiger, vom Befeuchtungsgrad abhängiger Wert der einzelnen Strömungsfelder 7 bestimmt, was nachfolgend kurz als "Druckmessung" bezeichnet wird.

Die Druckmessung erfolgt vorzugsweise zyklisch für alle Brennstoffzellen 2. In Abhängigkeit von der Druckmessung kann dann der Gasstrom einer Brennstoffzelle 2 mit erhöhtem Druckabfall bzw. Strömungswiderstand oder erhöhtem Befeuchtungsgrad mittels der Gassteuereinrichtung 14 erhöht werden. Insbesondere erfolgt eine Steuerung oder ggf. sogar Regelung des Gasstroms durch die betreffende Brennstoffzelle 2 in Abhängigkeit vom Ergebnis der Druckmessung.

Vorzugsweise wird die Druckmessung für die Brennstoffzellen 2 periodisch wiederholt, so daß eine fortlaufende Überwachung ermöglicht wird.

Die Druckmessung kann unabhängig von der Überwachung der Leistungsfähigkeit der Brennstoffzellen 2 oder zusätzlich dazu, insbesondere nach Feststellung eines Leistungsabfalls einer Brennstoffzelle 2, eingesetzt werden.

Vorschlagsgemäß ist es also möglich, den Gasstrom durch die Strömungsfelder 7 einzelweise oder gruppenweise für die Brennstoffzellen 2 in Abhängigkeit von der Leistung, der Spannung, dem Druckabfall, dem Strömungswiderstand, dem Befeuchtungsgrad oder einem sonstigen damit korrelierten Wert der jeweiligen Brennstoffzelle(n) 2 zu steuern oder zu regeln.

Beim voranstehend beschriebenen Darstellungsbeispiel ist ein gemeinsamer Drucksensor 24 insbesondere für alle Brennstoffzellen 2 vorgesehen. Bedarfsweise kann zusätzlich auch ein entsprechender Drucksensor in der Gaszuführung 8 vorgesehen sein, um unmittelbar bzw. leichter den Druckabfall bestimmen zu können.

Zusätzlich oder alternativ zu dem Drucksensor kann auch ein sonstiger Sensor, insbesondere ein Strömungssensor, eingesetzt werden, um den Strömungswiderstand oder damit korrelierte Werte, wie die Strömungsgeschwindigkeit, den Massenstrom oder dgl., zu bestimmen. Die obigen Ausführungen hinsichtlich des Drucksensors gelten dann entsprechend. Anzumerken ist lediglich, daß die Strömungsgeschwindigkeit oder der Massenstrom einerseits und der Druckabfall oder der Strömungswiderstand andererseits umgekehrt voneinander abhängen, insbesondere umgekehrt proportional sind, und daß dies bei der Steuerung bzw. Regelung der einzelnen Brennstoffzellen 2 entsprechend berücksichtigt werden muß.

Gemäß einer weiteren, nicht dargestellten Ausführungsvariante kann auch jede Brennstoffzelle ein separater Drucksensor, Strömungssensor oder dgl. zugeordnet sein, um die Strömungsparameter, wie Druckabfall, Strömungswiderstand, Strömungsgeschwindigkeit, Massenstrom oder dgl., zu bestimmen. In diesem Fall ist die Gassteuereinrichtung 14 für die einzelweise oder gruppenweise Bestimmung der Strömungsparameter nicht erforderlich. Jedoch kann die Gassteuereinrichtung 14 für die oben beschriebene, bevorzugte Veränderung des Gasstroms zur Beeinflussung des Befeuchtungszustands der einzelnen Brennstoffzellen 2 eingesetzt werden.

Wenn eine erhöhte Befeuchtung einer Brennstoffzelle 2 oder mehrerer Brennstoffzellen 2 detektiert wird, erfolgt vorzugsweise eine Erhöhung des Gasstroms durch diese Brennstoffzelle(n) 2, insbesondere mittels der Gassteuereinrichtung 14. Alternativ oder zusätzlich ist es jedoch auch möglich, den Befeuchtungsgrad des zugeführten Gases, insbesondere der zugeführten Luft, in entsprechender Weise, insbesondere für diese Brennstoffzelle(n) 2 zu ändern. Dies kann beispielsweise dadurch erfolgen, daß eine vorgeschaltete (nicht dargestellte) Befeuchtung des Gases bzw. der Luft verringert wird.

Alternativ oder zusätzlich kann die vorschlagsgemäße Bestimmung der Strömungsparameter, wie Druckabfall, Strömungswiderstand oder eines dazu korrespondierenden Werts, auch brenngasseitig, also für die Brenngaszuführung 12 und Brenngasableitung 13 bzw. die anodenseitigen Strömungsfelder 6 eingesetzt werden. Dies ermöglicht wiederum auf einfache Weise eine optimierte, individuelle Steuerung oder Regelung der einzelnen Brennstoffzellen 2.

## Patentansprüche

1. Brennstoffzellenanordnung (1) mit mehreren, vorzugsweise geschichteten Brennstoffzellen (2), wobei jede Brennstoffzelle (2) ein Strömungsfeld (7) für Gas, insbesondere Luft oder ein sonstiges Oxidationsgas, aufweist und wobei die Strömungsfelder (7) parallel an eine Gaszuführung (8) und eine Gasableitung (9) angeschlossen sind,
**dadurch gekennzeichnet,**
**daß** die Brennstoffzellenanordnung (1) eine Einrichtung zur einzelweisen Bestimmung für jede Brennstoffzelle (2) des jeweiligen Druckabfalls, Strömungswiderstands oder eines dazu korrespondierenden Werts der Strömungsfelder (7) aufweist.

2. Brennstoffzellenanordnung nach Anspruch 1, **dadurch gekennzeichnet, daß** die Einrichtung einen Drucksensor (24) zur Bestimmung des jeweiligen Druckabfalls, Strömungswiderstands oder des dazu korrespondierenden Werts aufweist, insbesondere wobei nur ein Drucksensor (24) in der Gasableitung (9) angeordnet oder jeder Brennstoffzelle (2) ein Drucksensor (24) zugeordnet ist.

3. Brennstoffzellenanordnung nach Anspruch 1 oder 2, **dadurch gekennzeichnet, daß** die Einrichtung einen Strömungssensor zur Bestimmung des jeweiligen Druckabfalls, Strömungswiderstands oder des dazu korrespondierenden Werts aufweist, insbesondere wobei nur ein Strömungssensor in der Gasableitung (9) angeordnet oder jeder Brennstoffzelle (2) ein Strömungssensor zugeordnet ist.

4. Brennstoffzellenanordnung nach einem der voranstehenden Ansprüche, **dadurch gekennzeichnet, daß** die Brennstoffzellenanordnung (1) eine für mehrere oder alle Brennstoffzellen (2) gemeinsame, insbesondere der Gaszuführung (8) zugeordnete Gassteuereinrichtung (14) zur einzelweisen oder gruppenweisen Steuerung der Gasströme durch die Strömungsfelder (7) aufweist.

5. Brennstoffzellenanordnung nach Anspruch 4, **dadurch gekennzeichnet, daß** mittels der Gassteuereinrichtung (14) den Strömungsfeldern (7) einzelweise oder gruppenweise vorzugsweise zusätzlich Gas, insbesondere mit gegenüber der Gaszuführung (8) erhöhtem Druck, zuführbar ist.

6. Brennstoffzellenanordnung nach einem der voranstehenden Ansprüche, **dadurch gekennzeichnet, daß** die Gasströme durch die Strömungsfelder (7) sperrbar sind und/oder den Strömungsfeldern (7) einzelweise und vorzugsweise pulsartig Gas mittels der Gassteuereinrichtung (14) zuführbar ist.

7. Brennstoffzellenanordnung nach einem der voranstehenden Ansprüche, **dadurch gekennzeichnet, daß** der Gasstrom durch ein Strömungsfeld (7) einer Brennstoffzelle (2) in Abhängigkeit von ihrer Leistung, ihrer Spannung, ihrem Druckabfall, ihrem Strömungswiderstand, ihrem Befeuchtungsgrad oder einem sonstigen damit korrelierten Wert steuer- oder regelbar ist.

8. Verfahren zum Betreiben einer vorzugsweise gemäß einem der voranstehenden Ansprüche ausgebildeten Brennstoffzellenanordnung (1) mit mehreren, vorzugsweise geschichteten Brennstoffzellen (2), wobei jede Brennstoffzelle (2) ein Strömungsfeld (7) für Gas, insbesondere Luft oder ein sonstiges Oxidationsgas, aufweist und wobei die Strömungsfelder (7) parallel an eine Gaszuführung (8) und eine Gasableitung (9) angeschlossen sind,
**dadurch gekennzeichnet,**
**daß** der Druckabfall, Strömungswiderstand oder ein dazu korrespondierender Wert der Strömungsfelder (7) für jede Brennstoffzelle (2) einzeln bestimmt wird.

9. Verfahren nach Anspruch 8, **dadurch gekennzeichnet, daß** der Gasstrom durch ein Strömungsfeld (7) erhöht wird, wenn die Leistung oder Spannung der jeweiligen Brennstoffzelle (2) sinkt und/oder wenn der Druckabfall, der Strömungswiderstand oder der dazu korrespondierende Wert des Strömungsfelds (7) steigt.

10. Verfahren nach Anspruch 8 oder 9, **dadurch gekennzeichnet, daß** der Druckabfall, Strömungswiderstand oder der dazu korrespondierende Wert für jedes Strömungsfeld (7) der Brennstoffzellen (2) einzeln mittels eines gemeinsamen Strömungs- oder Drucksensors (24) in der Gasableitung (9) oder mittels den Brennstoffzellen (2) zugeordneter Strömungs- oder Drucksensoren (24) bestimmt wird.

11. Verfahren nach einem der Ansprüche 8 bis 10, **dadurch gekennzeichnet, daß** zur einzelweisen Bestimmung des Druckabfalls, des Strömungswiderstands oder des dazu korrespondierenden Werts der Strömungsfelder (7) die Gasströme durch die Strömungsfelder (7) wahlweise gesperrt werden und/oder den Strömungsfeldern (7) einzelweise und vorzugsweise pulsartig Gas zugeführt wird und/oder daß die einzelweise Bestimmung des Druckabfalls, des Strömungswiderstands oder des dazu korrespondierenden Werts der Strömungsfelder (7) zyklisch für alle Brennstoffzellen (2) und/oder periodisch erfolgt.

12. Verfahren nach einem der Ansprüche 8 bis 11, **dadurch gekennzeichnet, daß** die Gasströme durch die Strömungsfelder (7) einzelweise oder gruppenweise in Abhängigkeit von der Leistung, der Spannung, dem Druckabfall, dem Strömungswiderstand, dem Befeuchtungsgrad oder einem sonstigen damit korrelierten Wert der jeweiligen Brennstoffzelle(n) (2) gesteuert oder geregelt werden.
